# EUROPÄISCHE PATENTSCHRIFT

(11) **EP 1 698 804 B1**
(45) Veröffentlichungstag und Bekanntmachung des Hinweises auf die Patenterteilung: **19.12.2007**
(21) Anmeldenummer: 06002622.6
(22) Anmeldetag: 09.02.2006
(51) Int. Cl.: F16D 25/0638

(54) **Reibungskupplung**
Friction clutch
Embrayage à friction

(30) Priorität: 28.02.2005 DE 102005008961
(43) Veröffentlichungstag der Anmeldung: 06.09.2006
(60) Teilanmeldung: 07007843.1
(73) Patentinhaber: ZF FRIEDRICHSHAFEN AG, 88046 Friedrichshafen (DE)
(72) Erfinder: Schröder, Arthur, 97456 Hambach (DE)

(56) Entgegenhaltungen:
- WO-A-87/03348
- AT-B- 209 644
- DE-A1- 10 315 169
- DE-A1- 10 330 031
- DE-A1- 19 515 302
- DE-A1- 19 906 980
- GB-A- 991 436
- US-A- 3 412 834
- US-A- 5 680 758

## Beschreibung

Die Erfindung betrifft eine Kopplungsvorrichtung gemäß dem Oberbegriff des Anspruches 1.

Durch die DE 103 15 169 A1 ist eine derartige gattungsgemäße Kopplungsvorrichtung bekannt. Diese weist ein mit einem Antrieb, wie der Kurbelwelle einer Brennkraftmaschine, ausgebildetes Gehäuse, einen durch eine Getriebeeingangswelle gebildeten Abtrieb, der gegenüber dem Gehäuse in Umfangsrichtung relativ drehbar ist, und eine in dem Gehäuse aufgenommene, zwischen einer Einrückposition und einer Ausrückposition schaltbare Reibungskupplung auf, die als Kupplungsorgane ein Anpressmittel, beispielsweise als Kolben einer Überbrückungskupplung realisiert, und eine Mehrzahl von durch das Anpressmittel beaufschlagbaren, jeweils als Kupplungselemente wirksame Außen- und Innenlamellen aufweist, die ebenso wie das Anpressmittel in Achsrichtung begrenzt verlagerbar sind und jeweils über wenigstens eine Reibfläche verfügen. Die Innenlamellen sind an einem durch einen Torsionsschwingungsdämpfer getragenen Innenlamellenträger aufgenommen, wobei der Torsionsschwingungsdämpfer seinerseits mit einer Abtriebsnabe versehen ist, die mit dem Abtrieb mittels einer Verzahnung drehfest, aber axial verlagerbar in Wirkverbindung steht. Die Reibungskupplung nimmt ihre Einrückposition zur Übertragung eines Drehmomentes des Antriebs über das Gehäuse auf den Abtrieb ein, wenn das Anpressmittel in Kontakt mit der demselben benachbarten Lamelle getreten ist und die Lamellen in Achsrichtung reibschlüssig gegeneinander presst, wobei sich die in Achsrichtung am weitesten vom Anpressmittel entfernte Lamelle am Gehäuse abstützt. Im Gegensatz dazu liegt die Ausrückposition, in welcher diese Drehmomentübertragung zumindest teilweise aufgehoben ist, vor, wenn das Anpressmittel keine oder lediglich eine unwesentliche reibschlüssige Verbindung zwischen den Lamellen erzeugt.

Insbesondere in der Einrückposition können die Innenlamellen der Reibungskupplung eine durch eingeleitete Axialkräfte bedingte Durchbiegung erfahren und dadurch eine unerwünschte Klemmwirkung am Innenlamellenträger auslösen, der zu einer Axialverlagerung desselben in Richtung zu der vom Anpresselement abgewandten Abtriebswandung des Gehäuses führen kann. Dieser Bewegung des Innenlamellenträgers folgt zwangsläufig der Torsionsschwingungsdämpfer und damit auch die an demselben vorgesehene Abtriebsnabe, bis diese Bewegung durch eine zwischen der Abtriebsnabe und der Abtriebswandung des Gehäuses vorgesehene Axiallagerung begrenzt wird. Da diese Axiallagerung auf einem vergleichsweise großen Durchmesser um den Abtrieb angeordnet ist, treten relativ hohe Relativdrehgeschwindigkeiten zwischen der Abtriebsnabe und der Abtriebswandung des Gehäuses auf, so dass die Axiallagerung zugunsten einer Begrenzung der Reibwirkung als Wälzlagerung ausgebildet ist. Dadurch sind insbesondere bei eingeleiteten Axialstößen Schäden nicht unbedingt vermeidbar, und es entstehen nicht unbeträchtliche Kosten für Beschaffung und Installation der Wälzlagerung.

Problematisch bei dieser Ausgestaltung ist weiterhin, dass ein Lagerzapfen der Antriebswandung des Gehäuses, eine Zusatzlagerung zwischen diesem Lagerzapfen und der Abtriebsnabe sowie die bereits erwähnte Axiallagerung gegenüber der Abtriebswandung aufgereiht nebeneinander angeordnet sind, so dass bei ungünstiger Addition von Toleranzüberschüssen, nachfolgend als Übertoleranz bezeichnet, oder bei ungünstiger Addition eines Toleranzmangels, also einer Untertoleranz, eine nahezu feste Axialeinspannung der Abtriebsnabe oder eine ungewollt große Axialverlagerbarkeit der Abtriebsnabe auftritt. Im einen Fall einer Übertoleranz kann die Axialverlagerbarkeit des Anpresselementes in Richtung zur Abtriebswandung des Gehäuses bereits vollständig aufgebraucht sein, ohne dass die axiale Ausweichbewegung der Abtriebsnabe an der Axiallagerung ein Ende gefunden hat, so dass die Reibungskupplung nur unvollständig einrücken kann, was zu einer Begrenzung der Drehmomentübertragbarkeit führt. Im anderen Fall kann das Anpresselement dagegen nur einen Teil seiner Einrückbewegung vollziehen, da bereits vor Erreichen der endgültigen Einrückposition die Lamellen reibschlüssig miteinander in Wirkverbindung getreten sind, eine Axialverlagerbarkeit der Abtriebsnabe in Richtung zur Abtriebswandung des Gehäuses aber nicht mehr besteht.

Letztendlich besteht auch das Problem, dass die Abtriebsnabe aufgrund ihrer Verzahnung mit dem Abtrieb über eine mit Radialspiel ausgebildete Anbindung an den Abtrieb verfügt, so dass begrenzte Kippbewegungen der Abtriebsnabe gegenüber einer Drehachse der Kopplungsvorrichtung auch durch die der Abtriebsnabe zugeordnete Axiallagerung nicht restlos vermeidbar sind. Diese Kippbewegungen können zumindest zu funktionellen Nachteilen von Reibungskupplung und Torsionsschwingungsdämpfer, gegebenenfalls sogar zu Schäden an diesen Bauteilen führen.

Durch die WO 87/03348 A1 ist eine weitere Kopplungsvorrichtung bekannt. Diese weist ein mit einem Antrieb verbundenes Gehäuse und einen Abtrieb in Form einer Getriebeeingangswelle auf. Antrieb und Abtrieb werden in Wirkverbindung miteinander gebracht, wenn in einer Einrückposition eines eine Mehrzahl von Kupplungselementen beaufschlagenden Anpressmittels diese Kupplungselemente miteinander wirkverbunden werden. Während erste dieser Kupplungselemente drehfest mit dem Gehäuse sind, stehen zweite Kupplungselemente mit einer Abtriebsnabe drehfest, aber axial verlagerbar, in Verbindung. Diese Abtriebsnabe steht ihrerseits mittels einer Verzahnung drehfest, aber axial verlagerbar, mit der Getriebeeingangswelle in Verbindung.

Die Axialbewegbarkeit der somit schwimmend auf der Getriebeeingangswelle angeordneten Abtriebsnabe wird in Achsrichtung zwar nicht durch die Getriebeeingangswelle begrenzt, wohl aber durch im Eingriffsbereich der zweiten Kupplungselemente vorgesehene, axial beidseitige Anschläge, die mit den zweiten Kupplungselementen zusammen wirken. Damit mag die Abtriebsnabe zwar frei von Toleranzproblemen sein, jedoch verbleiben diejenigen Probleme, die sich aufgrund einer durch eingeleitete Axialkräfte bedingte Durchbiegung der zweiten Kupplungselemente ergeben, und die eine unerwünschte Klemmwirkung an der Abtriebsnabe auslösen.

Der Erfindung liegt die Aufgabe zugrunde, eine Kopplungsvorrichtung mit einem Gehäuse und einer Abtriebsnabe derart auszubilden, dass ohne funktionelle Nachteile auf eine Axiallagerung zwischen der Abtriebsnabe und einer Abtriebswandung des Gehäuses verzichtet werden kann, toleranzbedingte Probleme im axialen Bewegungsbereich der Abtriebsnabe wirksam vermieden sind, und zudem Kippbewegungen der Abtriebsnabe wirksam verhindert werden.

Diese Aufgabe wird erfindungsgemäß durch die im Anspruch 1 angegebenen Merkmale gelöst. Durch die Maßnahme, die Abtriebsnabe mit einem im Wesentlichen axial wirksamen Anschlagelement und den Abtrieb mit einem dem Anschlagelement zugeordneten Anschlag auszubilden, wird erreicht, dass der Abtriebsnabe eine exakt definierte Position in Bezug zum Abtrieb und damit letztendlich auch zu einer Abtriebswandung des Gehäuses zugeordnet ist, da der Abtrieb einer derartigen Kopplungsvorrichtung üblicherweise gegenüber deren Gehäuse und damit gegenüber einem Antrieb axial positioniert ist. Die Verwendung einer Axiallagerung unmittelbar zwischen der Abtriebsnabe und der abtriebsseitigen Gehäusewandung wird dadurch absolut entbehrlich. Da der Abtrieb bei einer Kopplungsvorrichtung üblicherweise durch eine Getriebeeingangswelle gebildet wird, auf welcher die Abtriebsnabe zwar axial verlagerbar, aber drehfest angeordnet ist, erfolgt der Kontakt zwischen Anschlagelement und Anschlag frei von einer Relativbewegung sowohl in radialer Richtung als auch in Umfangsrichtung, und damit verschleißfrei.

Die Abtriebsnabe ist gegenüber dem Abtrieb axial schwimmend aufgenommen. Da die Abtriebsnabe in Richtung zur antriebsseitiger Gehäusewandung allein mit einem Anpressmittel, beispielsweise einem Kolben einer Reibungskupplung, oder aber mit einer das Anpressmittel aufnehmenden Anpressmittel-Nabe, in axiale Wirkverbindung treten kann, ist eine extrem geringe Anzahl von Stellen, im günstigsten Fall sogar nur eine Stelle axial zwischen antriebsseitiger Gehäusewandung und abtriebsseitiger Gehäusewandung mit Toleranzen behaftet, so dass eine ungünstige Addition von Über- oder Untertoleranzen nicht auftreten kann. Entsprechend präzise kann die maximale Distanz A für den Spalt ausgelegt werden, so dass das Anpressmittel seine auf die abtriebsseitige Gehäusewandung zu gerichtete erste Position ungehindert erreichen kann. Wenn die Kopplungsvorrichtung derart ausgebildet ist, dass diese erste Position die Einrückposition des Anpreßmittels bildet, kann zudem aufgrund der präzisen Auslegbarkeit des Spaltes A für eine hinreichende Beaufschlagung der Kupplungselemente, beispielsweise in Form von Lamellen, zur Übertragung eines ungeminderten Drehmomentes gesorgt werden.

In weiteren Ansprüchen sind vorteilhafte Weiterbildungen des Anschlagelementes sowie des Anschlags jeweils als Radialvorsprung am jeweiligen Aufnahmebauteil - also Abtriebsnabe oder Abtrieb - angegeben. Mit besonders geringem Bauaufwand ist hierbei das Anschlagelement formschlüssig in eine Vertiefung der Abtriebsnabe eingesetzt und/oder als Sicherungsring ausgebildet. Bei dem Anschlag ist der Bauaufwand minimal, wenn er an dem Abtrieb angeformt ist, wobei diese Ausgestaltung insbesondere bei einem Abtrieb in Form einer Getriebeeingangswelle von Vorteil ist.

Im folgenden wird ein Ausführungsbeispiel der Erfindung anhand einer Zeichnung näher erläutert. Es zeigt:
- Fig. 1: die obere Hälfte eines Längsschnittes durch eine Kopplungsvorrichtung;
- Fig. 2: eine vergrößerte Herauszeichnung des in Fig. 1 umkreisten Bereichs X;
- Fig. 3: wie Fig. 2, aber mit anderer konstruktiver Ausführung;
- Fig. 4: wie Fig. 2, aber mit anderer konstruktiver Ausführung;
- Fig. 5: wie Fig. 2, aber mit anderer konstruktiver Ausführung.

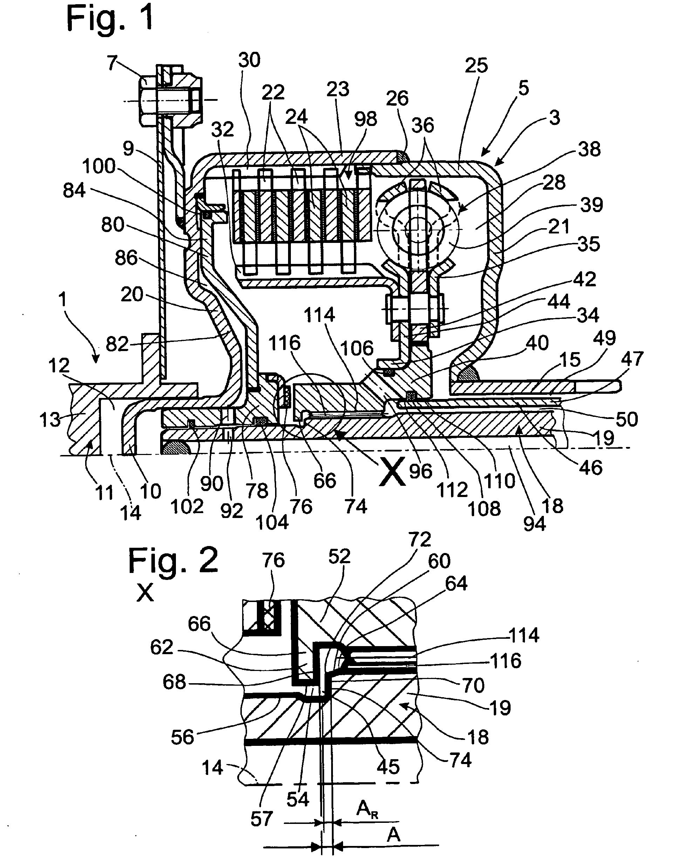

In Fig. 1 ist ein Antriebsstrang 1 mit einer erfindungsgemäßen Kopplungsvorrichtung 3 schematisch dargestellt. Die Kopplungsvorrichtung 3 umfasst ein Gehäuse 5, das über eine Mehrzahl von Befestigungselementen 7 und ein Kopplungselement 9, wie z.B. eine Flexplatte, mit einem Antrieb 11, beispielsweise der Kurbelwelle 13 einer Brennkraftmaschine, zur gemeinsamen Drehung gekoppelt werden kann und im Bereich einer Drehachse 14 einen Lagerzapfen 10 aufweist, der in einer am Antrieb 11 ausgebildeten Zentrierführung 12 aufgenommen ist. An der vom Antrieb 11 entfernt liegenden Axialseite weist das Gehäuse 5 eine Gehäusenabe 15 auf, die beispielsweise mit einer nicht gezeigten Getriebeanordnung verbunden ist und dort eine ebenfalls nicht gezeigte Fluidförderpumpe zur Drehung antreibt. Zur Gehäusenabe 15 konzentrisch angeordnet ist ein Abtrieb 18, der mit seinem freien Ende in das Gehäuse 5 ragt. Dieser Abtrieb 18 kann beispielsweise durch eine Getriebeeingangswelle 19 gebildet sein.

Das Gehäuse 5 weist eine sich vom Lagerzapfen 10 aus im Wesentlichen nach radial außen erstreckende antriebsseitige Gehäusewandung 20 und eine sich von der Gehäusenabe 15 aus im Wesentlichen nach radial außen erstreckende abtriebsseitige Gehäusewandung 21 auf. Diese beiden Gehäusewandungen 20, 21 gehen jeweils im radial äußeren Bereich in die beiden Gehäusewandungen 20, 21 axial miteinander verbindende Gehäuseaußenschalen 23, 25 über, die druckdicht, beispielsweise mittels einer Schweißnaht 26, miteinander verbunden sind um einen Verlust fluidförmigen Fördermediums aus einer von den Gehäusewandungen 20, 21 und den Gehäuseaußenschalen 23, 25 umschlossenen Fluidkammer 28 zu verhindern.

In der Fluidkammer 28 des Gehäuses 5 ist eine Mehrzahl von ersten Kupplungselementen 22, welche mit dem Gehäuse 5 und hierbei insbesondere mit dessen als antriebsseitiger Kupplungselemententräger 30 wirksamen Gehäuseaußenschale 23 zur gemeinsamen Drehung gekoppelt sind, sowie eine Mehrzahl von zweiten Kupplungselementen 24, welche an einem abtriebsseitigen Kupplungselemententräger 32 drehfest aufgenommen sind, zur Bildung einer Reibungskupplung 98 enthalten. Der abtriebsseitige Kupplungselemententräger 32 stützt sich radial über ein erstes Deckblech 34 eines Torsionsschwingungsdämpfers 38 an einer Abtriebsnabe 40 des Torsionsschwingungsdämpfers 38 ab, wobei das erste Deckblech 34 gemeinsam mit einem zweiten Deckblech 35 einen Eingangsteil 36 des Torsionsschwingungsdämpfers 38 bildet. Der Eingangsteil 36 ist gegen die Wirkung eines Energiespeichers 39 gegenüber einem Ausgangsteil 42 in Form einer Nabenscheibe 44 relativ drehbar, wobei die Nabenscheibe 44 drehfest an der Abtriebsnabe 40 befestigt ist. Eine als Radialstützelement 46 dienende, gehäusefeste Stützwelle 47 begrenzt mit der Gehäusenabe 15 einen ersten ringförmigen Kanal 49, mit dem Abtrieb 18 dagegen einen zweiten ringförmigen Kanal 50. Darüber hinaus ist die Abtriebsnabe 40 zumindest entlang eines Teils ihrer Axialerstreckung mit einer Verzahnung 114 ausgebildet, die mit einer am Abtrieb 18 vorgesehenen Gegenverzahnung 116 eine Drehverbindung 118 zur gemeinsamen Drehung, aber zur relativen Axialverlagerbarkeit bildet.

Durch die Drehverbindung 118 wird über den Kopf- sowie Fusskreisdurchmesser von Verzahnung 114 und Gegenverzahnung 116 eine Zentrierung erzielt.

Die Abtriebsnabe 40 ist innerhalb eines in Fig. 2 vergrößert herausgezeichneten und durch einen Spalt 45 mit der maximalen Distanz A bestimmten Erstreckungsbereichs in Achsrichtung "schwimmend" gelagert, sie verfügt also über eine begrenzte axiale Relativverlagerbarkeit gegenüber dem Abtrieb 18 und, sofern dieser gegenüber dem Antrieb 11 und damit gegenüber dem Gehäuse 5 axial positioniert ist, letztendlich auch gegenüber dem Gehäuse 5.

Die Abtriebsnabe 40 ist mit einem in Richtung zum Abtrieb 18 weisenden Radialvorsprung 62 versehen, der mit einem dem Abtrieb 18 zugewandten, radial freien Ende 57 bis auf einen Radialspalt 54 an einen Wellengrund 56 des Abtriebs 18 herangeführt ist. An der der abtriebsseitigen Gehäusewandung 21 zugewandten Axialseite des Radialvorsprunges 64 ist eine im Wesentlichen stufige Querschnittsvergrößerung 60 am Abtrieb 18 vorgesehen, die als zweiter Radialvorsprung 64 wirksam ist. Die beiden Radialvorsprünge 62, 64 wirken zusammen, wenn der als Anschlagelement 66 dienende erste Radialvorsprung 62 mit einer an seiner der abtriebsseitigen Gehäusewandung 21 zugewandten Axialseite vorgesehenen, in Richtung zum zweiten Radialvorsprung 64 weisenden ersten Anlagefläche 68 in Kontakt getreten ist mit einer zweiten Anlagefläche 70, die an einem radial freien Ende 72 des als Anschlag 74 dienenden zweiten Radialvorsprunges 64 vorgesehen und auf den ersten Radialvorsprung 62 zugerichtet ist.

Die Abtriebsnabe 40 kann mit ihrem der antriebsseitigen Gehäusewandung 20 zugewandten Ende an einer Axiallagerung 76, vorzugsweise als Gleitlager ausgebildet, in axiale Anlage gelangen. Die Axiallagerung 76 ihrerseits ist an einer Anpressmittel-Nabe 78 eines Anpressmittels 80 befestigt, wobei das Anpressmittel 80 als Kolben 82 einer Reibungskupplung 98 ausgebildet und mit dem benachbarten Kupplungselement 22 in Wirkverbindung bringbar ist.

Das Anpressmittel 80 ist axial zwischen der antriebsseitigen Gehäusewandung 20 und der Fluidkammer 28 angeordnet und begrenzt gemeinsam mit der antriebsseitigen Gehäusewandung 20 einen Druckraum 86, der über Strömungsdurchlässe 90 in der Anpressmittel-Nabe 78 sowie über Strömungsdurchlässe 92 im Antrieb 18, also in der Getriebeeingangswelle 19, mit einer Mittenbohrung 94 der Getriebeeingangswelle 19 verbunden ist. Weiterhin sind Strömungsdurchgänge 96 in der Abtriebsnabe 40 vorgesehen, durch welche eine Strömungsverbindung zwischen dem Kanal 50 und der Fluidkammer 28 herstellbar ist. Die letztgenannte ist gegenüber dem Druckraum 86 durch eine Dichtung 100 abgedichtet, ebenso wie die Getriebeeingangswelle 19 gegenüber der Anpressmittel-Nabe 78 durch Dichtungen 102 und 104 sowie die Abtriebsnabe 40 gegenüber dem ersten Deckblech 34 des Torsionsschwingungsdämpfers 38 durch eine Dichtung 106 und die Abtriebsnabe 40 gegenüber der Stützwelle 47 durch eine Dichtung 108. Durch die Dichtungen 106 und 108 soll vermieden werden, dass von einer vom Kanal 50 über die Strömungsdurchgänge 96 in die Fluidkammer 28 geleiteten Strömung erhebliche Strömungsanteile entweder über den Torsionsschwingungsdämpfer 36 in den Kanal 49 oder direkt in denselben gelangen, ohne zuvor die Kupplungselemente 22 und 24 zur Kühlung erreicht zu haben. Im Gegensatz dazu wird durch die Abdichtungen 102 und 104 zwischen Getriebeeingangswelle 19 und Anpressmittel-Nabe 78 vermieden, dass Strömungsfluid, das zur Druckbeaufschlagung des Druckraumes 86 vorgesehen ist und diesem über die Mittenbohrung 94 der Getriebeeingangswelle 19 sowie über die Strömungsdurchlässe 90, 92 zugeleitet wird, in die Fluidkammer 28 absickern kann.

In Fig. 1 befindet sich das Anpressmittel 80 in seiner Ausrückposition, in welcher die Kupplungselemente 22, 24 entlastet und daher nicht zur Übertragung eines vom Antrieb 11 stammenden und auf das Gehäuse 5 geleiteten Drehmomentes auf den Abtrieb 18 befähigt sind. Durch Aufbau eines Überdruckes im Druckraum 86 gegenüber der Fluidkammer 28 wird das Anpressmittel 80 in Richtung zu den Kupplungselementen 22, 24 axial verlagert und bewirkt durch Beaufschlagung des dem Anpressmittel 80 nächst benachbarten ersten Kupplungselementes 22 ein zunehmend verstärktes Anpressen der weiteren Kupplungselemente 22, 24 aneinander, da eine Ausweichbewegung dieser Kupplungselemente in Richtung zur abtriebsseitigen Gehäusewandung 21 durch das derselben am nächsten kommende letzte Kupplungselement 22, das ortsfest an der Gehäuseaußenschale 25 aufgenommen ist, unterbunden wird. Diese Bewegung ist beendet, wenn das Anpressmittel 80 eine definierte Endposition und damit seine Einrückposition erreicht hat.

Bei dieser Einrückbewegung nimmt das Anpressmittel 80 die daran befestigte Anpressmittel-Nabe 78 in Richtung zur Abtriebsnabe 40 mit. Durch größeren Durchmesser des Strömungsdurchganges 92 in der Anpressmittel-Nabe 78 gegenüber dem Strömungsdurchgang 90 in der Getriebeeingangswelle 19 bleibt die Zuströmungsmöglichkeit weiteren Strömungsmittels in den Druckraum 86 erhalten. Sobald die Anpressmittel-Nabe 78 über die Axiallagerung 76 mit der Abtriebsnabe 40 in Wirkverbindung getreten ist, nimmt auch die Abtriebsnabe 40 an der Bewegung der Anpressmittel-Nabe 78 teil.

Fig. 2 zeigt die Abtriebsnabe 40 in einer Axialposition, in welcher noch keine axiale Relativbewegung der Abtriebsnabe 40 gegenüber der Getriebeeingangswelle 19 eingesetzt hat. Der Spalt 45 axial zwischen dem Anschlagelement 66 und dem Anschlag 74 verfügt dann über seine maximale Breite und sorgt für eine Distanz A des Anschlagelementes 66 gegenüber dem Anschlag 74. Diese Distanz A ist mit Vorzug derart ausgelegt, dass sie bei einer Bewegung der Anpressmittel-Nabe 78 in Richtung zur Einrückposition des Anpressmittels 80 nur teilweise aufgebraucht wird. Es verbleibt demnach eine Restdistanz A_{R}, durch welche zum Einen ungünstige Übertoleranzen im Bereich der Naben 40 und 78 aufgenommen werden können, zum Anderen aber auch eine Kompensationsstrecke entsteht, die beispielsweise dann erforderlich ist, wenn Verformungen an den Kupplungselementen 22, 24 und hierdurch bedingte Verkantungen gegenüber dem abtriebsseitigen Kupplungselemententräger 32 zu einer nochmals weitergehenden Axialverlagerung der Abtriebsnabe 40 in Richtung zur abtriebsseitigen Gehäusewandung 21 führen. Ein endgültiges Ende findet diese Axialverlagerung der Abtriebsnabe 40 allerdings, sobald auch die Restdistanz A_{R} aufgebraucht und das Anschlagelement 66 am Anschlag 74 in Anlage gekommen ist.

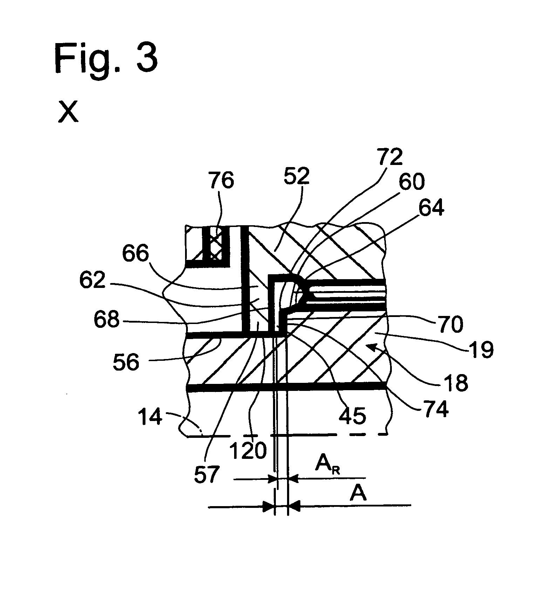

Eine Alternativlösung zu dieser Ausgestaltung zeigt Fig. 3, bei welcher der Radialvorsprung 64 der Abtriebsnabe 40 mit seinem radial freien Ende 57 bis unmittelbar an den Wellengrund 56 des Abtriebs 18 herangeführt ist. Dadurch entsteht an diesem radial freien Ende 57 eine Zentrierstützfläche 120 der Abtriebsnabe 40, durch welche eine Zentrierung derselben auf dem Abtrieb 18 erfolgt, und somit die Drehverbindung 118 von dieser Funktion befreit wird.

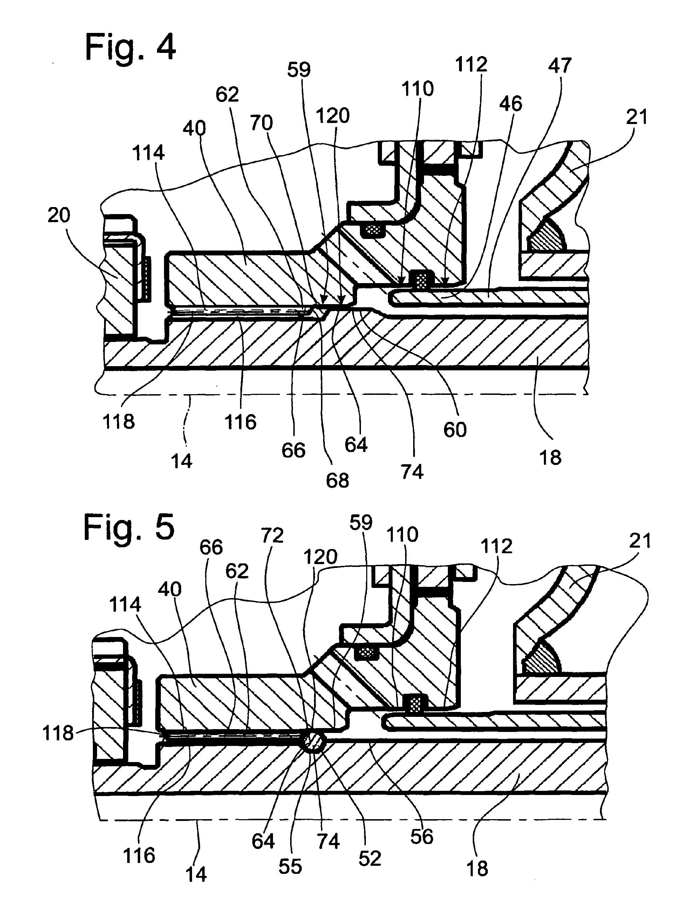

In Fig. 4 ist eine Ausführung der Abtriebsnabe 40 dargestellt, bei welcher die Zentrierstützfläche 120 an einem Nabengrund 59 im axialen Erstreckungsbereich der als Radialvorsprung 64 dienenden Querschnittsvergrößerung 60 des Abtriebs 18 vorgesehen ist, so dass die Zentrierung der Abtriebsnabe 40 durch die Zentrierstützfläche 120 in Verbindung mit dem Radialvorsprung 64 erfolgt. Als Anschlagelement 66 dient bei dieser Ausführung die gegenüber dem Nabengrund 59 in Richtung des Abtriebs 18 radial überstehende und damit als Radialvorsprung 62 wirksame Verzahnung 114 der Abtriebsnabe 40, die mit ihrem dem Radialvorsprung 64 zugewandten axialen Ende die erste Anschlagfläche 68 bildet, während die der Verzahnung 114 zugewandte zweite Anschlagfläche 70 an der diesbezüglichen Axialseite des Radialvorsprunges 64 vorgesehen ist, der somit als Anschlag 74 wirksam ist.

Die Abtriebsnabe 40 weist in Richtung zur abtriebsseitigen Gehäusewandung 21 an einer radialen Innenseite 110 eine Radialstützfläche 112 auf, mit welcher sie sich am radial benachbarten Radialstützelement 46, also an der Stützwelle 47, zusätzlich abstützen kann. Hierdurch sollen Kippbewegungen der Abtriebsnabe 40 gegenüber der Drehachse 14 zumindest reduziert werden. Selbstverständlich kann die Abstützung der Abtriebsnabe 40 am Radialstützelement 46 auch bei der Ausführung nach Fig. 1 bis 3 vorgesehen sein, und ist daher in Fig. 1 nicht nur zeichnerisch dargestellt, sondern auch mit Bezugsziffern bezeichnet.

Fig. 5 zeigt eine Ausführung, bei welcher wiederum mittels der Drehverbindung 118 über den Kopf- sowie Fusskreisdurchmesser von Verzahnung 114 und Gegenverzahnung 116 eine Zentrierung der Abtriebsnabe 40 auf dem Abtrieb 18 erzielt wird. Darüber hinaus dient, ebenso wie bei Fig. 4, die Verzahnung 114 als der der Abtriebsnabe 40 zugeordnete, gegenüber dem Nabengrund 59 überstehende Radialvorsprung 62 zur Bildung des Anschlagelementes 66, während der dem Abtrieb 18 zugewiesene und als Anschlag 74 dienende Radialvorsprung 64 durch einen Sicherungsring 52 gebildet wird, der in eine Radialvertiefung 55 des Abtriebs 18 eingreift, zumindest aber mit seinem radial freien Ende 72 über den Wellengrund 56 des Abtriebs 18 in Richtung zum Nabengrund 59 der Abtriebsnabe 40 hinausragt. Wenn der Sicherungsring 52 dabei mit seinem radial freien Ende 72 am Nabengrund 59 der Abtriebsnabe 40 zur Anlage kommt, ist deren Kontaktfläche mit dem Sicherungsring 52 als Zentrierstützfläche 120 wirksam.

## Patentansprüche

1. Kopplungsvorrichtung, aufweisend ein mit einem Antrieb (11) ausgebildetes Gehäuse (5), einen Abtrieb (18), der gegenüber dem Gehäuse (5) in Achsrichtung der Drehachse (14) des Gehäuses (5) positioniert, aber in Umfangsrichtung drehbar ist, und zumindest eine in dem Gehäuse (5) aufgenommene, zwischen einer Einrückposition und einer Ausrückposition schaltbare Reibungskupplung (98), die als Kupplungsorgane wenigstens ein Anpressmittel (80) und mindestens ein durch das Anpressmittel (80) beaufschlagbares, über wenigstens eine Reibfläche verfügendes Kupplungselement (22, 24) aufweist, wobei eines (24) der Kupplungselemente über eine Abtriebsnabe (40) mit dem Abtrieb (18) in Wirkverbindung steht, und durch die Reibungskupplung (98) in der Einrückposition ein Drehmoment des Antriebs (11) über das Gehäuse (5) auf den Abtrieb (18) übertragbar ist, während in der Ausrückposition diese Drehmomentübertragung zumindest teilweise aufgehoben ist,
**dadurch gekennzeichnet,**
**dass** die Abtriebsnabe (40) über ein im Wesentlichen axial wirksames Anschlagelement (66) verfügt, das in einer ersten Position von Einrück- oder Ausrückposition der Reibungskupplung (98) maximal um eine durch einen Spalt (45) bewirkte Distanz (A) von einem Anschlag (74) des Abtriebs (18) entfernt ist, und beim Übergang in eine zweite Position der Reibungskupplung (98) unter der Wirkung des Anpressmittels (80) bei zumindest teilweisem Abbau der Distanz (A) eine Annäherung an den Anschlag (74) erfährt, und dass die Abtriebsnabe (40) mit ihrem der antriebsseitigen Gehäusewandung (20) zugewandten Ende an einer Axiallagerung (76) in axiale Anlage gelangen kann.

2. Kopplungsvorrichtung nach Anspruch 1,
**dadurch gekennzeichnet,**
**dass** das Anschlagelement (66) durch einen die Abtriebsnabe (40) an deren dem Abtrieb (18) zugewandter Radialseite überstehenden Radialvorsprung (62) gebildet ist, der zumindest mit einem radial abtriebsseitigen freien Ende (57) in den radialen Erstreckungsbereich des Anschlags (74) eingreift und an einer Axialseite über eine erste Anlagefläche (68) für einen Kontakt mit einer am Anschlag (74) vorgesehenen zweiten Anlagefläche (70) verfügt.

3. Kopplungsvorrichtung nach Anspruch 1 oder 2 ,
**dadurch gekennzeichnet,**
**dass** der Anschlag (74) durch einen am Abtrieb (18) vorgesehenen Radialvorsprung (64) gebildet ist, welcher zur Bereitstellung der zweiten Anlagefläche (70) dient.

4. Kopplungsvorrichtung nach einem der Ansprüche 1 bis 3,
**dadurch gekennzeichnet,**
**dass** das Anschlagelement (66) einstückig mit der Abtriebsnabe (40) ausgebildet ist.

5. Kopplungsvorrichtung nach einem der Ansprüche 1 bis 4,
**dadurch gekennzeichnet,**
**dass** der Anschlag (74) durch einen den Abtrieb (18) an dessen der Abtriebsnabe (40) zugewandten Radialseite überragenden Radialvorsprung (64) gebildet ist, der zumindest an einer Axialseite radial zwischen einem Wellengrund (56) des Abtriebs (18) und einem radial freien Ende (72) des Radialvorsprunges (64) zur Bereitstellung der zweiten Anlagefläche (70) dient und in den radialen Erstreckungsbereich der ersten Anlagefläche (68) am Radialvorsprung (62) des Anschlagselementes (66) eingreift.

6. Kopplungsvorrichtung nach Anspruch 5,
**dadurch gekennzeichnet,**
**dass** der Anschlag (74) über einen formschlüssig in einer Radialvertiefung (55) des Abtriebs (18) aufgenommenen Sicherungsring (52) verfügt, der mit zumindest seinem radial freien Ende (72) radial über den Wellengrund (56) des Abtriebs (18) hinausragt.

7. Kopplungsvorrichtung nach Anspruch 6,
**dadurch gekennzeichnet,**
**dass** der Sicherungsring (52) radial bis an einen Nabengrund (59) der Abtriebsnabe (40) herangeführt ist.

8. Kopplungsvorrichtung nach einem der Ansprüche 1 bis 7,
**dadurch gekennzeichnet,**
**dass** das Anschlagelement (66) durch eine vom Nabengrund (59) der Abtriebsnabe (40) vorgesehene und sich in Richtung des Abtriebs (18) radial erstreckende Verzahnung (114) gebildet ist.

9. Kopplungsvorrichtung nach Anspruch 8,
**dadurch gekennzeichnet,**
**dass** die Verzahnung (114) durch Eingriff in eine vom Wellengrund (56) des Abtriebs (18) an dessen radialer Außenseite radial ausgehende Gegenverzahnung (116) eine Drehverbindung (118) bildet und **dadurch** eine drehfeste, aber axial verlagerbare Anordnung der Abtriebsnabe (40) auf dem Abtrieb (18) ermöglicht.

10. Kopplungsvorrichtung nach einem der Ansprüche 1 bis 9,
**dadurch gekennzeichnet,**
**dass** die Abtriebsnabe (40) am Nabengrund (59) und/oder am radial freien Ende (57) ihres Radialvorsprunges (62) über eine Zentrierstützfläche (120) verfügt, mit welcher sie am Abtrieb (18) in Auflage steht.

11. Kopplungsvorrichtung nach einem der Ansprüche 1 bis 10,
**dadurch gekennzeichnet,**
**dass** die Abtriebsnabe (40) axial benachbart zum Nabengrund (59) an ihrer radialen Innenseite (110) über eine Radialstützfläche (112) verfügt, mit welcher sie an einem Radialstützelement (46) in Auflage steht.

12. Kopplungsvorrichtung nach Anspruch 11,
**dadurch gekennzeichnet,**
**dass** das Radialstützelement (46) durch eine gehäusefesten Stützwelle (47) gebildet ist.

## Claims

1. Coupling device, having a housing (5) which is formed with a drive input (11), having a drive output (18) which is positioned opposite the housing (5) in the axial direction of the rotational axis (14) of the housing (5) but is rotatable in the peripheral direction, and having at least one friction clutch (98) which is held in the housing (5) and is switchable between an engaged position and a disengaged position, which friction clutch (98), as a coupling component, has at least one pressing means (80) and at least one clutch element (22, 24) which can be acted on by the pressing means (80) and has at least one friction face, with one (24) of the clutch elements being operatively connected by means of a drive output hub (40) to the drive output (18), and with it being possible by means of the friction clutch (98) in the engaged position for a torque of the drive input (11) to be transmitted via the housing (5) to the drive output (18), while in the disengaged position, said torque transmission is at least partially eliminated,
**characterized**
**in that** the drive output hub (40) has a substantially axially acting stop element (66) which, in a first position, the engaged or disengaged position, of the friction clutch (98), is spaced apart by a maximum of a distance (A), caused by a gap (45), from a stop (74) of the drive output (18), and during the transition into a second position of the friction clutch (98), is moved closer to the stop (74) under the action of the pressing means (80) such that the distance (A) is at least partially reduced, and in that the drive output hub (40) can, with its end which faces towards the drive-input-side housing wall (20), come into axial contact against an axial bearing (76).

2. Coupling device according to Claim 1,
**characterized**
**in that** the stop element (66) is formed by a radial projection (62) which protrudes beyond the drive output hub (40) at its radial side which faces towards the drive output (18), which radial projection (62) engages, at least with a radially drive-output-side free end (57), into the radial region of extent of the stop (74), and has, at an axial side, a first contact face (68) for contact with a second contact face (70) which is provided on the stop (74).

3. Coupling device according to Claim 1 or 2,
**characterized**
**in that** the stop (74) is formed by a radial projection (64) which is provided on the drive output (18), which radial projection (64) serves for providing the second contact face (70).

4. Coupling device according to one of Claims 1 to 3,
**characterized**
**in that** the stop element (66) is formed in one piece with the drive output hub (40).

5. Coupling device according to one of Claims 1 to 4,
**characterized**
**in that** the stop (74) is formed by a radial projection (64) which protrudes beyond the drive output (18) at its radial side which faces towards the drive output hub (40), which radial projection (64) serves, at least at an axial side radially between a shaft base (56) of the drive output (18) and a radially free end (72) of the radial projection (64), for providing the second contact face (70), and engages into the radial region of extent of the first contact face (68) on the radial projection (62) of the stop element (66).

6. Coupling device according to Claim 5,
**characterized**
**in that** the stop (74) has a securing ring (52) which is held in a form-fitting manner in a radial depression (55) of the drive output (18), which securing ring (52) protrudes, at least with its radially free end (72), radially beyond the shaft base (56) of the drive output (18).

7. Coupling device according to Claim 6,
**characterized**
**in that** the securing ring (52) is extended radially up to a hub base (59) of the drive output hub (40).

8. Coupling device according to one of Claims 1 to 7,
**characterized**
**in that** the stop element (66) is formed by a toothing (114) which is provided from the hub base (59) of the drive output hub (40) and extends radially in the direction of the drive output (18) .

9. Coupling device according to Claim 8,
**characterized**
**in that** the toothing (114), by engaging into a mating toothing (116) which extends radially from the shaft base (56) of the drive output (18) at its radial outer side, forms a rotational connection (118), and thereby permits a rotationally fixed but axially moveable arrangement of the drive output hub (40) on the drive output (18).

10. Coupling device according to one of Claims 1 to 9,
**characterized**
**in that** the drive output hub (40) has, on the hub base (59) and/or on the radially free end (57) of its radial projection (62), a centring support face (120), by means of which said drive output hub (40) is in contact against the drive output (18).

11. Coupling device according to one of Claims 1 to 10,
**characterized**
**in that** the drive output hub (40) has, axially adjacent to the hub base (59) at its radial inner side (110), a radial support face (112), by means of which said drive output hub (40) is in contact against a radial support element (46).

12. Coupling device according to Claim 11,
**characterized**
**in that** the radial support element (46) is formed by a support shaft (47) which is fixed to the housing.

## Revendications

1. Dispositif d'accouplement, présentant un carter (5) réalisé avec un entraînement (11), une prise de mouvement (18) qui est positionnée par rapport au carter (5) dans la direction axiale de l'axe de rotation (14) du carter (5) mais est rotative en direction circonférentielle, et au moins un embrayage à friction (98) reçu dans le carter (5) et pouvant être commuté entre une position embrayée et une position débrayée, embrayage qui présente comme organes d'embrayage au moins un moyen de pression (80) et au moins un élément d'embrayage (22, 24) pouvant être sollicité par le moyen de pression (80) et disposant d'au moins une surface de friction, sachant qu'un (24) des éléments d'embrayage est fonctionnellement relié à la prise de mouvement (18) via un moyeu (40) de prise de mouvement, et sachant qu'un couple de rotation de l'entraînement (11) peut, par l'embrayage à friction (98) dans la position embrayée, être transmis via le carter (5) sur la prise de mouvement (18), tandis que dans la position débrayée cette transmission de couple est au moins partiellement supprimée,
**caractérisé en ce que** le moyeu (40) de prise de mouvement dispose d'un élément de butée (66) actif essentiellement axialement, élément qui, dans une première position parmi la position embrayée et la position débrayée de l'embrayage à friction (98), est éloigné d'une butée (74) de la prise de mouvement (18) au plus d'une distance (A) créée par un interstice (45), et qui, lors du passage dans une deuxième position de l'embrayage à friction (98), sous l'action du moyen de pression (80), est rapproché de la butée (74) avec suppression au moins partielle de la distance (A), et **en ce que** le moyeu (40) de prise de mouvement, par son extrémité tournée vers la paroi de carter (20) côté entraînement, peut parvenir en application axiale contre un palier axial (76).

2. Dispositif d'accouplement selon la revendication 1, **caractérisé en ce que** l'élément de butée (66) est formé par une saillie radiale (62) dépassant du moyeu (40) de prise de mouvement sur son côté radial tourné vers la prise de mouvement (18), saillie qui s'engage au moins par une extrémité libre (57) située radialement côté prise de mouvement dans la région d'étendue radiale de la butée (74), et qui dispose sur un côté axial d'une première surface de butée (68) pour un contact avec une deuxième surface de butée (70) prévue sur la butée (74).

3. Dispositif d'accouplement selon la revendication 1 ou 2, **caractérisé en ce que** la butée (74) est formée par une saillie radiale (64) qui est prévue sur la prise de mouvement (18) et qui sert à fournir la deuxième surface de butée (70).

4. Dispositif d'accouplement selon l'une quelconque des revendications 1 à 3, **caractérisé en ce que** l'élément de butée (66) est réalisé d'un seul tenant avec le moyeu (40) de prise de mouvement.

5. Dispositif d'accouplement selon l'une quelconque des revendications 1 à 4, **caractérisé en ce que** la butée (74) est formée par une saillie radiale (64) dépassant de la prise de mouvement (18) sur son côté radial tourné vers le moyeu (40) de prise de mouvement, saillie qui sert à fournir la deuxième surface de butée (70) au moins sur un côté axial, radialement entre un fond d'arbre (56) de la prise de mouvement (18) et une extrémité radialement libre (72) de la saillie radiale (64), et qui s'engage dans la région d'étendue radiale de la première surface de butée (68) prévue sur la saillie radiale (62) de l'élément de butée (66).

6. Dispositif d'accouplement selon la revendication 5, **caractérisé en ce que** la butée (74) dispose d'un jonc d'arrêt (52) qui est reçu en engagement positif dans un renfoncement radial (55) de la prise de mouvement (18) et qui, au moins par son extrémité radialement libre (72), dépasse radialement au-delà du fond d'arbre (56) de la prise de mouvement (18).

7. Dispositif d'accouplement selon la revendication 6, **caractérisé en ce que** le jonc d'arrêt (52) est approché radialement jusque contre un fond de moyeu (59) du moyeu (40) de prise de mouvement.

8. Dispositif d'accouplement selon l'une quelconque des revendications 1 à 7, **caractérisé en ce que** l'élément de butée (66) est formé par une denture (114) prévue depuis le fond de moyeu (59) du moyeu (40) de prise de mouvement et s'étendant radialement en direction de la prise de mouvement (18).

9. Dispositif d'accouplement selon la revendication 8, **caractérisé en ce que** la denture (114) forme une liaison tournante (118) par engagement dans une denture complémentaire (116) partant radialement du fond d'arbre (56) de la prise de mouvement (18) sur son côté extérieur radial, et permet ainsi une disposition en rotation solidaire, mais à déplacement axial du moyeu (40) de prise de mouvement sur la prise de mouvement (18).

10. Dispositif d'accouplement selon l'une quelconque des revendications 1 à 9, **caractérisé en ce que** le moyeu (40) de prise de mouvement dispose, sur le fond de moyeu (59) et/ou à l'extrémité radialement libre (57) de sa saillie radiale (62), d'une surface (120) de soutien et de centrage par laquelle il s'appuie sur la prise de mouvement (18).

11. Dispositif d'accouplement selon l'une quelconque des revendications 1 à 10, **caractérisé en ce que** le moyeu (40) de prise de mouvement dispose, axialement au voisinage du fond de moyeu (59), sur son côté intérieur radial (110), d'une surface de soutien radiale (112) par laquelle il s'appuie sur un élément de soutien radial (46).

12. Dispositif d'accouplement selon la revendication 11, **caractérisé en ce que** l'élément de soutien radial (46) est formé par un arbre de soutien (47) solidaire du carter.
